Europäisches Patentamt

European Patent Office

Office européen des brevets

(19)

(11) Publication number: **0 062 739**
**B1**

(12)     EUROPEAN PATENT SPECIFICATION

(45) Date of publication of patent specification: **16.07.86**

(21) Application number: **82100972.7**

(22) Date of filing: **10.02.82**

(51) Int. Cl.⁴: **G 11 B 5/127, G 11 B 5/29**

(54) **Multielement magnetic head assembly and method of making such assembly.**

(30) Priority: **13.04.81 US 253959**

(43) Date of publication of application:
**20.10.82 Bulletin 82/42**

(45) Publication of the grant of the patent:
**16.07.86 Bulletin 86/29**

(84) Designated Contracting States:
**DE FR GB IT NL**

(56) References cited:
EP-A-0 047 383
US-A-3 579 214
US-A-3 626 396
US-A-3 909 932
US-A-4 072 993
US-A-4 298 899

Soviet Inventions Illustrated Week C42, 26
November 1980 Sections L03, T03, W04

IBM TECHNICAL DISCLOSURE BULLETIN, Vol.
20, No. 10, March 1978 New York V.D. DANIELS
et al. "Diffusion Bonding of Dissimilar
Ceramics"

(73) Proprietor: **International Business Machines
Corporation
Old Orchard Road
Armonk, N.Y. 10504 (US)**

(72) Inventor: **Argumedo, Armando Jesus
9511 East Fifth Street
Tucson Arizona 85710 (US)**
Inventor: **Chow, William Wai-Chung
1440 S Sumatra Place
Tucson Arizona 85710 (US)**
Inventor: **Dunn, Lowell Everett
11440 E Sundance Drive
Tucson Arizona 85715 (US)**
Inventor: **Lakey, Billy Rex
3717 S Domenic Place
Tucson Arizona 85730 (US)**

(74) Representative: **Lewis, Alan John
IBM United Kingdom Patent Operations
Hursley Park
Winchester, Hants, SO21 2JN (GB)**

Courier Press, Leamington Spa, England.

# Description

This invention relates to a multielement magnetic head for example for cooperation with multiple tracks of a magnetic data recording medium.

A common type of multitrack magnetic head used for magnetic tape recorders is constructed from ferrite sections separated by glass. The ferrite is initially machined and lapped into rectangular blocks, and cut by a saw to allow the insertion of glass between the sections to define track width. It is generally necessary to use a relatively thick ferrite layer to minimize cracking of the brittle ferrite material during cutting and processing. The amount of ferrite material used is thus determined by mechanical strength, and not by electrical or magnetic considerations. It is necessary to have precise spacing between the cuts in the ferrite, as well as parallelism of the slots that are cut so that data signals may be properly recorded and to produce the cuts it is desirable to use a multiplicity of thin saws joined in precise parallel alignment and uniformly spaced. However, such thin saws tend to wobble when cutting through a thick ferrite layer, with adverse effects on the alignment and width of the cuts. It is accordingly an object of this invention to provide a multielement magnetic head assembly, and a method of making such an assembly which substantially reduces these difficulties.

European patent application No. 81105738.9, Publication number 47383 (Chung) falling within the terms of Article 54(3), discloses a multielement magnetic head comprising a closure piece having a row of magnetic pole elements bonded to a planar non-magnetic substrate and a bridge piece having a common return pole element provided as a magnetic wafer bonded to the substrate and spaced therefrom by a layer of non-magnetic material. The pole elements are bonded to a longitudinal edge of the substrate.

The Chung head presents some manufacturing difficulty and imposes limits on the track spacing. It is an object of the invention to reduce manufacturing difficulties and to enable narrower track spacings to be written and read.

In accordance with the invention there is provided a multi-element magnetic head comprising a closure piece consisting of a planar non-magnetic ceramic substrate supporting two thin layers of ferrite material of substantially identical thickness, said layers being spaced apart so as to be separated by a groove and one of said layers having a multiplicity of parallel slots cut through it to divide it into a row of pole elements, and a -bridge piece consisting of a common pole element provided as a magnetic wafer having a thin spacing layer of dielectric material secured to a planar face thereof, which layer abuts against and is adhesively secured to the two layers of ferrite material on the substrate and of a multiplicity of flat, conductive coils deposited on the spacing layer so that the coils are respectively aligned with the pole elements.

The invention will be described in detail with reference to the drawings in which:

FIGURES 1A through 1D are isometric views illustrating the process steps for fabricating a closure piece for a magnetic write head, in accordance with this invention;

FIGURE 1E is an isometric view of a completed magnetic head closure piece;

FIGURE 2 is an isometric side view of a wafer, partly broken away, depicting an arrangement of conductive coils associated with a series of elements of multielement magnetic heads, according to this invention; and

FIGURE 3 is an isometric view of a magnetic write head assembly formed with the closure piece of Fig. 1E and the wafer, the closure piece and wafer being shown as separated for the purpose of clarity and explanation.

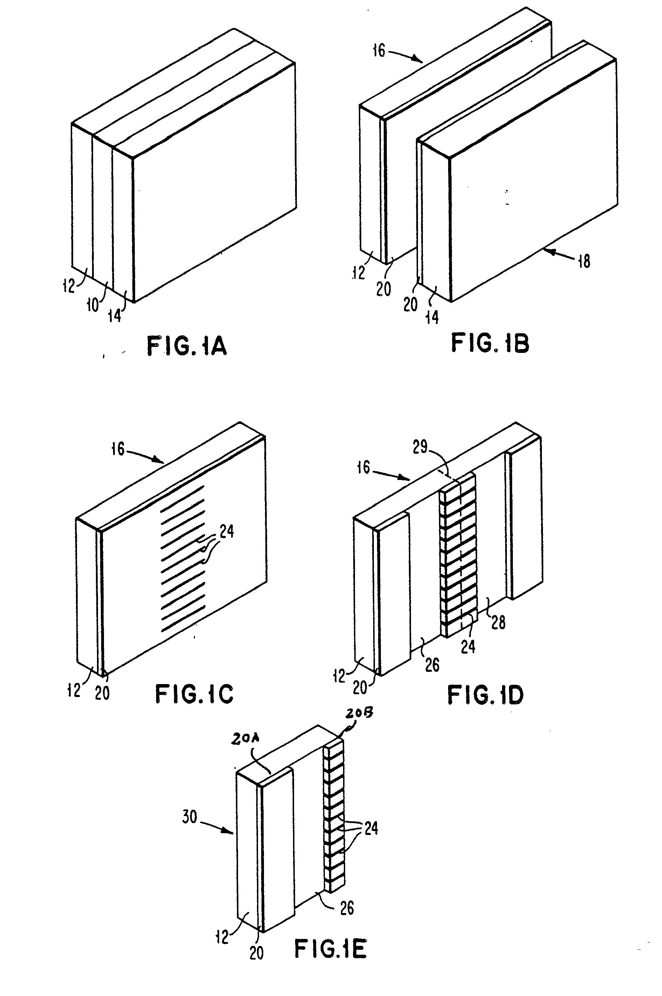

With reference to FIGS. 1A—D, the process of fabricating a closure piece for a magnetic head assembly includes the step of forming a sandwich structure (FIG. 1A) of a ferrite layer 10, disposed between layers 12 and 14 of nonmagnetic barium titanate ceramic (BTC). The ferrite is preferably diffusion bonded to the BTC layers. Diffusion may be accomplished in a fixture which is maintained at 900° Celsius for one hour at 350 Bar pressure, by way of example. Alternatively, the layers may be glass bonded, in a well known manner.

The sandwich structure is sliced centrally to produce two similar laminates 16 and 18, each having a relatively thin layer of ferrite 20 and 22 respectively, supported by the relatively thick BTC substrate 12 and 14 (FIG. 1B). The laminates 16 and 18 are ground, lapped and polished to a desired thickness. For example, the ferrite layers 20 and 22 may each be about 0.20 mm thick and the BTC layers 12 and 14 about 2.0 mm thick.

The surface of the exposed ferrite layer 20 of laminate 16 is saw cut toward the BTC layer 12 to a depth of about 0.25 millimeters, such that the resultant slots 24 are about 50 microns wide and 1.5 mm long, by way of example. The BTC layer 12 serves as a support for the ferrite layer 20 and minimizes cracking and breakage during processing of the ferrite. The slots 24 are filled with a high temperature glass in a liquid state which solidifies when cooled (FIG. 1C). Grooves 26 and 28 are cut through the ferrite layer 20, exposing the BTC layer 12 thereby separating the slotted ferrite region from the remaining ferrite. The slotted and grooved laminate is then bisected by a transverse cut 29 through the center of the slotted area and the BTC layer 12, as shown in FIG. 1D. As a result, two completed closure pieces 30, such as illustrated in FIG. 1E, are obtained. The laminate 18 is processed in the same manner as laminate 16 to provide two additional similar closure pieces.

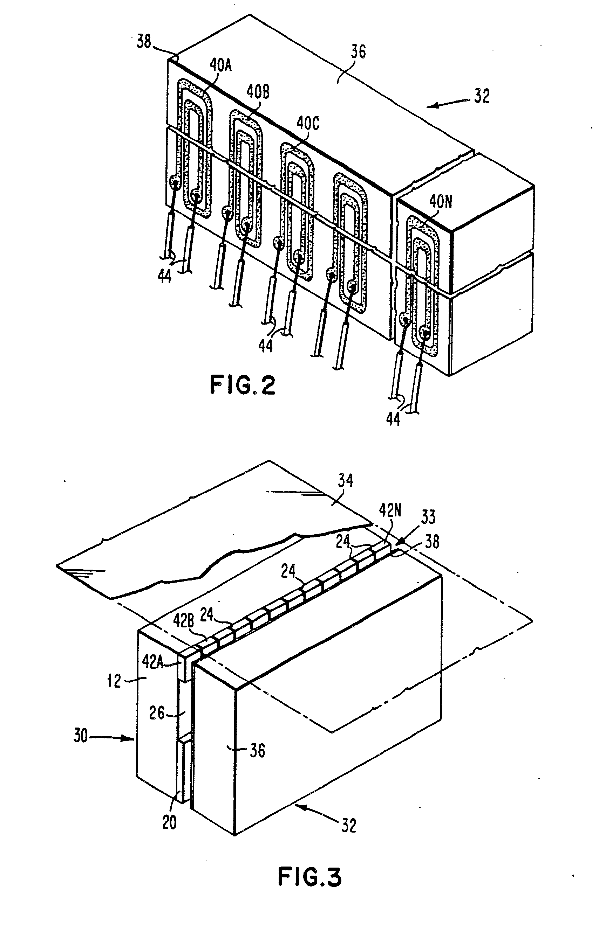

To complete the magnetic head assembly, the closure piece 30 is joined, by epoxy for example, to a wafer 32 that will form the transducing gap 33 and complete the magnetic flux path. The wafer 32 includes electrical coils and leads for conducting current representative of signals to be recorded on or read out from a magnetic medium or tape 34 (Fig. 3).

As shown in FIG. 2, the wafer 32 is formed with a ferrite substrate 36 on which a spacing layer 38 of $Al_2O_3$ is deposited by sputtering for example. A series of thin film conductive coils 40A—N, which may be made of gold, copper or aluminum, are vapor deposited in a common plane on the spacing layer 38, and are positioned so that each discrete coil 40A—N is associated with a corresponding track element 42A—N, represented in FIG. 3. Electrical leads 44 are solder connected to the terminals of each coil to enable passing current to and from the coils for interaction with the magnetic circuit of the head assembly.

By virtue of this invention that employs a hard ceramic substrate to support a thin ferrite which is bonded to the substrate by a diffusion process, the ferrite may be penetrated and slotted to a shallow depth. The shallow cuts allow the use of smaller and narrower cutting saws and wheels that are more accurate than those conventionally used to saw ferrite material used in magnetic head manufacture. In this way, parallelism and precise spacing of the tracks are more easily achieved. Less ferrite material is needed, and the reduction of ferrite breakage improves production yields. Furthermore, only a single glass is needed for this novel construction, as compared to the magnetic head structures that require a two glass bonding, i.e., a high temperature and allow temperature glass.

## Claims

1. A multi-element magnetic head comprising a closure piece consisting of a planar non-magnetic ceramic substrate (12) supporting two thin layers (20A, 20B) of ferrite material of substantially identical thickness, said layers being spaced apart so as to be separated by a groove (26) and one of said layers (20B) having a multiplicity of parallel slots cut through it to divide it into a row of pole elements (42A—N), and a bridge piece consisting of a common pole element (36) provided as a magnetic wafer having a thin spacing layer of dielectric material (38) secured to a planar face thereof, which layer (38) abuts against and is adhesively secured to the two layers of ferrite material (20A, 20B) on the substrate (12) and of a multiplicity of flat, conductive coils deposited on the spacing layer so that the coils are respectively aligned with the pole elements.

2. A magnetic head as claimed in claim 1, in which the substrate (12) is formed of barium titanate ceramic, the wafer (36) is formed of ferrite and the spacing layer is formed of $Al_2O_3$.

3. A method of forming a closure piece for a magnetic head as claimed in claim 1 or 2, comprising forming a laminated structure consisting of a ferrite layer bonded to a planar surface of a relatively thick non-magnetic ceramic support substrate, cutting (Fig. 1C) a row of parallel slots (24) through the ferrite layer in a central band of the ferrite layer, filling the slots with non-magnetic material, removing (Fig. 1D) an intermediate band of the ferrite layer each side of the slotted central band to leave two edge bands separated from the central band by grooves, and cutting (Fig. 1E) the substrate into two similar parts along a line perpendicular and mid-way in the lengths of the slots.

4. A method of forming a magnetic head as claimed in claim 1 or 2, comprising forming a closure piece as claimed in claim 3, forming a bridge piece by forming a laminated structure consisting of a non-magnetic spacing layer of predetermined thickness bonded to a planar surface of a magnetic wafer and depositing a multiplicity of uniformly spaced thin film planar coils on said spacing layer, and bonding the bridge piece to the closure piece.

## Revendications

1. Tête magnétique multiéléments comprenant une pièce de fermeture constituée d'un substrat plan (12) en céramique non magnétique supportant deux couches minces (20A, 20B) de ferrite d'épaisseur sensiblement identique, les dites couches étant espacées l'une de l'autre de manière à être séparées par une gorge (26) et l'une de ces couches (20B) comportant une pluralité d'entailles parallèles découpées à travers cette couche pour la diviser en une série d'éléments polaires (42A—N), et une pièce de pont constituée d'un élément polaire commun (36) sous la forme d'une pastille magnétique à une face plane de laquelle est fixée une couche mince d'espacement en matière diélectrique (38), cette couche (38) étant appliquée et fixée par collage contre les deux couches de ferrite (20A, 20B) sur le substrat (12), et d'une pluralité d'enroulements conducteurs plats déposés sur la couche d'espacement de façon à ce que les enroulements soient respectivement alignés avec les éléments polaires.

2. Tête magnétique suivant la revendication 1, dans laquelle le substrat (12) est en céramique de titanate de baryum, la pastille (36) est en ferrite et la couche d'espacement est en $Al_2O_3$.

3. Procédé de fabrication d'une pièce de fermeture pour une tête magnétique suivant la revendication 1 ou 2, qui consiste à préparer une structure stratifiée comprenant une couche de ferrite liée à une surface plane d'un substrat support relativement épais en céramique non magnétique, à couper (figure 1C) une série d'entailles parallèles (24) à travers la couche de ferrite dans une bande centrale de la couche de ferrite, à remplir les entailles avec une matière non magnétique, à enlever (figure 1D) une bande intermédiaire de la couche de ferrite de chaque côté de la bande centrale entaillée, de manière à laisser deux bandes de bordure séparées de la bande centrale par des gorges, et à tronçonner (figure 1E) le substrat en deux parties semblables le long d'une ligne perpendiculaire aux entailles et au milieu de la longueur de celles-ci.

4. Procédé de fabrication d'une tête magnétique suivant la revendication 1 ou 2, qui consiste à préparer une pièce de fermeture suivant la revendication 3, à préparer une pièce de pont par formation d'une structure stratifiée, comprenant une couche d'espacement non magnétique d'épaisseur prédéterminée liée à une surface plane d'une pastille magnétique, et dépôt d'une pluralité d'enroulements plans en film mince uniformément espacés sur ladite couche d'espacement, et à lier la pièce de pont à la pièce de fermeture.

**Patentansprüche**

1. Mehrelement- Magnetkopfeinheit mit einem Abschlußteil aus einem ebenen nichtmagnetischen keramischen Substrat (12), das zwei dünne Schichten (20A, 20B) aus Ferritmaterial mit im wesentlichen identischen Dicken trägt, die im Abstand voneinander angeordnet sind und die durch eine Vertiefung (26) voneinander getrennt sind, wobei eine der Schichten (20B) eine Vielzahl von parallelen Schlitzen aufweist, die durch sie hindurch geschnitten sind, um sie in eine Reihe von Polelementen (42A—N) aufzuteilen, und mit einem Brückenteil, das aus einem gemeinsamen Polelement (36) in der Gestalt eines magnetischen Plättchens besteht, das mit einer auf deren ebenen Fläche befestigten dünnen Trennschicht aus einem dielektrischen Material (38) versehen ist, die gegen die beiden Schichten aus Ferritmaterial (20A, 20B) auf dem Substrat (12) anstößt und mit ihnen haftend verbunden ist, und mit einer Vielzahl von flachen leitenden Spulen, die auf der Trennschicht so angeordnet sind, daß die Spulen mit den Polelementen fluchten.

2. Magnetkopf nach Anspruch 1, bei dem das Substrat (12) aus Barium-Titanat-Keramik, das Plättchen (36) aus Ferrit und die Trennschicht aus $AL_2O_3$ besteht.

3. Verfahren zum Herstellen eines Abschlußteils für einen Magnetkopf nach Anspruch 1 oder 2 durch Bilden einer Schichstruktur, die aus einer Ferritstruktur besteht, welche mit der ebenen Oberfläche eines verhältnismäßig dicken nichtmagnetischen Trägersubstrates verbunden ist, Schneiden (Fig. 1C) einer Reihe von parallelen Schlitzen (24) durch die Ferritschicht in einem zentralen Bandbereich der Ferritschicht, Auffüllen der Schlitze mit nicht-magnetischem Material, Entfernen (Fig. 1D) eines Zwischenbandes der Ferritschicht auf jeder Seite des geschlitzen zentralen Bandbereichs, so daß zwei Randbänder übrigbleiben, die vom zentralen Bandbereich durch Vertiefungen getrennt sind, und Schneiden (Fig. 1E) des Substrates in zwei ähnliche Teile entlang einer Linie, die rechtwinklig und mittig zu den Längen der Schlitze verläuft.

4. Verfahren zum Herstellen des Magnetkopfes nach Anspruch 1 oder 2, bei dem ein Abschlußstück gemäß Anspruch 3 gebildet wird, unter Herstellen eines Brückenteils durch Bilden einer Schichtstruktur aus einer nichtmagnetischen Trennschicht vorherbestimmter Dicke, die mit der ebenen Oberfläche eines magnetischen Plättchens verbunden ist, und durch Aufbringen einer Vielzahl von gleichmäßig verteilten ebenen Dünnfilmspulen auf der Trennschicht und schließlich durch Verbinden des Brückenteils mit dem Abschlußstück.

0 062 739

FIG. 1A

FIG. 1B

FIG. 1C

FIG. 1D

FIG. 1E

1

FIG.2

FIG.3